(19) Europäisches Patentamt
European Patent Office
Office européen des brevets

(11) Publication number: **0 439 006 A1**

# (12) EUROPEAN PATENT APPLICATION

(21) Application number: **91100056.0**

(22) Date of filing: **02.01.91**

(51) Int. Cl.$^5$: **C08K 9/04**, C08K 3/34, C08L 23/02

(30) Priority: **24.01.90 IT 1914290**

(43) Date of publication of application:
**31.07.91 Bulletin 91/31**

(84) Designated Contracting States:
**AT BE CH DE DK ES FR GB GR LI NL SE**

(71) Applicant: **ENIMONT AUGUSTA INDUSTRIALE S.r.l.**
**16, Piazza della Repubblica**
**I-20121 Milano(IT)**

(72) Inventor: **Brichta, Corrado**
**36, Via Losanna**
**I-20154 Milan(IT)**
Inventor: **Bressan, Giancarlo**
**37, Via Compagnoni**
**I-20129 Milan(IT)**
Inventor: **Troglia, Claudio**
**27, Via Raffaello Sanzio**
**I-20149 Milan(IT)**
Inventor: **Barbero, Giancarlo**
**22, Via Vittoro Veneto**
**I-28041 Arona, Novara(IT)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8**
**W-8000 München 40(DE)**

## (54) Nucleants for crystalline polyolefins modified by means of macroradicalic degradation.

(57) Described are nucleants for thermodegradable crystalline polyolefins which are composed of zeolitic molecular sieves modified with at least one arylcarboxylic acid.

These nucleants may be added before or during the macroradicalic degradation of the polyolefins and provide products having a high degree of nucleation.

EP 0 439 006 A1

# NUCLEANTS FOR CRYSTALLINE POLYOLEFINS MODIFIED BY MEANS OF MACRORADICALIC DEGRADATION

The present invention relates to nucleants for crystalline polyolefins modified by means of macroradicalic degradation.

More specifically, the present invention relates to nucleants for thermodegradable compositions of crystalline homopolymers or copolymers of α-olefins, particularly propylene.

Polyolefins and, more specifically, polypropylene and copolymers of propylene, have a relatively low crystallization rate compared to other crystalline polymers.

The crystallized polymers may, consequently, show a low degree of crystallization, large dimensions of the crystals or a non-homogeneous crystallization, which has a negative effect on the optical (transparency, translucence, etc.), mechanical (elasticity modulus, ultimate tensile stress, etc.) and rheological (moulding cycles and dimensional stability) properties of the corresponding injection moulded products.

To overcome these disadvantages, suitable nucleants are generally added to the above polymers.

The use of inorganic additives such as talc, silica, carbon-black and kaolin is already known. However, these products have a limited nucleating effect.

The use of organic nucleants which favorably modify the crystallization process of crystalline homopolymers and copolymers of propylene, including mono-or dibasic salts of aliphatic acids, such as sodium succinate, sodium glutarate, sodium caproate, etc., is also known.

The use of alkali metal or aluminium salts of aryl carboxylic acids such as aluminium benzoate, sodium or potassium benzoate, sodium beta-naphthoate, lithium benzoate, aluminium monohydroxy-di-p-tert-butyl benzoate, etc. is also known.

The use of organic nucleants, for example for isotactic polypropylene, is described in US-A-3,207,737; 3,367,926; 4,016,118; 4,532,280 and 4,585,817.

However, the use of these organic nucleants has several disadvantages which are mainly due to the difficulty to homogeneously disperse said nucleants in the polymer because of their low compatibility, their tendency to segregate in the dry mixing process and also their tendency to sublimate when the transformation temperature is high. Furthermcre, some nucelants show the so-called "plate out" phenomenon, i.e. separation from the polymer, resulting in a deposit on the surface of the mould and the final product.

Finally, it should be pointed out that all of the above organic additives do not allow the heterogeneous nucleation of crystalline polymers with a controlled rheology modified by means of macroradicalic reactions at high transformation temperatures.

EP-A-85,968 describes the use of nucleants composed of a combination of an aromatic monocarboxylic acid and a silicate or an alumino-silicate as a base, especially zeolites.

Because of their instability during the transformation of the polymer, these nucleants do not have a significant nucleating effect in polymers modified by a chemical restructurization process.

Nucleants composed of a product obtained through the reaction between an aryl carboxylic acid and a crystalline aluminosilicate of an alkali or alkaline earth metal, such as the zeolitic tectosilicate according to US-A-4,518,731, are also unsuitable for this nucleating process, owing to their thermal instability at the high temperatures required for the macroradicalic restructurization of polypropylene.

It has now surprisingly been found that nucleants comprising at least one zeolitic molecular sieve which has a water content of less than or equal to 5% by weight and which is modified with at least one aromatic monocarboxylic acid, are stable at the high restructurization temperatures of the crystalline thermodegradable polyolefins and have a considerable nucleating effect in the moulding process.

These agents can,therefore,be added before or during the macroradicalic degradation of the polyolefins and allow the manufacture of products having a high degree of nucleation.

The term "zeolitic molecular sieve" as used herein refers to any natural or synthetic zeolite, thermally treated until the water content is reduced to 5% or less by weight, generally to from about 0 to about 4%.

Examples of zeolites which can be used in the preparation of the nucleants of the present invention are those of type 3A, 4A, 5A, 10X, 13X, Y etc. in their sodium and/or potassium and/or calcium forms.

Particularly preferred zeolites are 4A zeolites which, as is known, are composed of crystalline hydrated aluminium and sodium silicate having the general formula:

$Na_2O.Al_2O_3.2\ SiO_2.4.5\ H_2O$

and a particle size distribution of from about 0.1 to about 100 $\mu$m, preferably of from about 0.1 to about 10

μm.

Any aromatic monocarboxylic acid of general formula:

Ar-COOH

wherein Ar is an aromatic radical (preferably having 6 to 16, and particularly 6 to 12 carbon atoms), optionally having more than one aromatic ring, for example, two or three aromatic rings which can be condensed, and optionally substituted with one or more hydroxy and/or lower alkyl and/or lower alkoxy groups, (for example, $C_1$-$C_4$ alkyl or alkoxy groups) may be used in the synthesis of the above nucleants. Examples thereof include p-tert-butyl-benzoic acid, benzoic acid, naphthoic acid, toluic acid, p-ethoxybenzoic acid, p-methoxybenzoic acid, salicylic acid, diphenyl propionic acid, etc.

The nucleant according to the present invention is particularly suitable for use with crystalline polyolefins such as polypropylene, copolymers of propylene with ethylene or other (preferably $C_4$-$C_8$) alpha-olefins, crystalline polymers of ethylene, copolymers of ethylene with said alphaolefins, etc.

According to the present invention, the nucleant may be prepared by using the following procedure:

a) thermally treating a zeolite at a temperature higher than about 200°C, preferably of from about 250 to about 300°C, optionally under a flow of dry inert gas such as nitrogen; and

b) causing a reaction between the thermally treated zeolite and an aromatic monocarboxylic acid at a temperature of from about 150 to about 350°C, preferably of from about 160 to about 310°C.

The thermal treatment described under a) is carried out until the water content has been reduced to 5% by weight or less. The treatment at the above mentioned temperatures generally takes 0.5 to 4 hours.

The reaction between the zeolitic molecular sieve and the acid is carried out preferably at atmospheric pressure and with quantities of acid of from 8 to 20 parts by weight per 100 parts of activated zeolite.

The nucleants thus obtained may be added to the polyolefins either before or during the relative thermodegradation processes. These procedures cause a reduction and a narrower distribution of the molecular weights which leads to an increase of the melt flow index of the polymers and, consequently, a reduction of their viscosity in the molten state.

If added beforehand, the nucleants of the present invention may be dispersed, optionally in "masterbatch" form and according to normal mixing techniques which guarantee a homogeneous distribution, together with other possible additives, such as stabilizers or additives required for the thermodegradation such as radicalic initiators or antioxidants. For this purpose, normal Henschel type mixers may be used, as well as a V shape, or belt mixer, or a tumbler. Mixers at high temperatures of the Banbury type may also be used. Polymers in powder form may be used with a preferred particle size distribution of 50 to 200 mesh or less, particularly powders sold under the trade name Spheripol®, or other flaked polymers or chips.

The above nucleants may be added to the polyolefins in quantities which depend on the kind of polymer used but generally range from 0.5 to 15% by weight, preferably from 0.8 to 2% of the total mixture of nucleant plus polymer.

The selective thermodegradation of the polyolefins, especially of the homo- and copolymers of propylene, may be carried out, using the techniques already known in the art, in the presence of a radicalic initiator of the C-C type and particularly according to the procedure described in EP-A-326,166 the contents whereof form an integral part of the present description. In this procedure the thermodegradation of the polyolefins, particularly of the homo-and co-polymers of propylene, is carried out at high temperature, of from 250 to 300°C, in the presence of primary or secondary antioxidants and derivatives of benzopinacole.

The nucleant of the present invention affects the temperatures and the crystallization times, increasing the former and decreasing the latter, it improves the optical properties of the moulded products and reduces the moulding times of the polyolefin to which it has been added.

More specifically, the effect of the present nucleant on the temperature and crystallization rate as well as on the optical properties can be tested by means of various techniques; the most significant ones are based on the following physical parameters:

- crystallization times and temperatures of the molten polymer, using the Differential Scanning Calorimetry (DSC) as described by H.N. Beck et al. in J.Appl.Polymer Science 9, (1965) page 2131;
- transparency (Haze) according to ASTM - D 1003 (on samples of film obtained by the moulding process).

The following examples are given to illustrate the present invention, without limiting its scope in any way.

EXAMPLE 1 (Comparative)

A sample of 5 kg of isotactic polypropylene chips, sold under the trade name Moplen® D60 P (Himont Italia) and having a melt flow index (MFI) of 0.3 dg/min. at 230 °C and 21.6 N (ASTM-D-1238/L), was thoroughly mixed in a tumbler with 0.1% by weight of an antioxidant based on 2,6-di-tert-butyl-p-cresol (BHT) and 0.1% by weight of a phenolic antioxidant containing sulphur (sold as Irganox® 1035 by Ciba-Geigy), composed of 2,2-thiodiethyl-3-(3,5-di-tert-butyl-4-hydroxyphenyl)propionate. 0.6% by weight of a radicalic activator of the C-C type composed of 2,3-dimethyl-2,3-diphenyl-butane (sold as Interox® CCDFB by Peroxid-Chemie G.m.b.H.) was added together with 0.2% by weight of calcium stearate as lubricant. The resulting mixture was then injection moulded at temperatures (of the molten product) of 280-290 °C, and cooled down in a mould kept at a temperature of 30 °C, whereby 2 mm thick sheets were obtained. The crystallization and melting characteristics of the sheets were then examined. The test was carried out on a micro-sample taken from the moulded sheets, by using a differential scanning calorimeter (Perkin Elmer DSC 1B), in a nitrogen stream, at a cooling rate of 16 °C/min. and with a melt increase of 8 °C/min. starting from a temperature of the molten product of between 190 and 230 °C. The starting temperature of crystallization and the temperature corresponding to the highest exothermic peak were then deduced from the calorimetric diagram. The individual test samples obtained from the sheets were also subjected to the Haze test and the MFI was measured. The obtained results are listed in Table 1.

EXAMPLE 1A (Comparative)

100 parts by weight of crystalline polypropylene in powder form, sold as Spheripol® Moplen® YD50G by Himont and having a MFI of 0.3 dg/min. at 230 °C and 21.6 N, were mixed, for 30 seconds in a Henschel type turbo-mixer, with 0.1 parts by weight of BHT, 0.1 parts by weight of Irganox® 1035 antioxidant and 0.1 parts by weight of calcium stearate. To this mixture there were added 0.6 parts by weight of a radicalic initiator composed of di-(trimethylsilyl)-fluorenone (pinacole form) having formula (I):

(I)

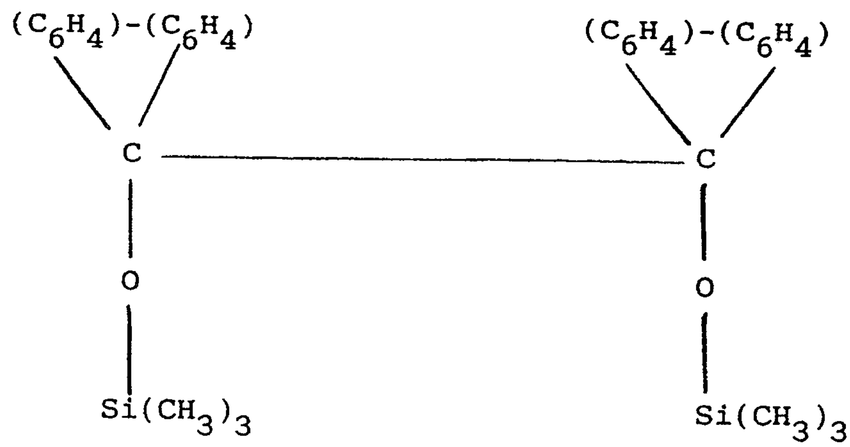

and obtained by using procedure B, described by J.V. Crivello et al. in the Journal of Polymer Science: Part A Polymer Chemistry vol. 24, (1986) page 1200. Finally, 1 part by weight of a product composed of 4A zeolites, containing 10% by weight of water and p-tert-butylbenzoic acid, was added. The mixture was then extruded and granulated in a Werner-Pfleiderer twin-screw extruder (type 2D5 K28),the screws having a diameter of 28 mm. The procedure was carried out at a head temperature of 280-290 °C, with a load capacity of 3 kg/hr (stay time = 100 seconds; screw speed = 100 revs/min). Small test samples of 30 x 20 mm (thickness = 1 mm) were obtained from the chips by means of a moulding press at a temperature of 200-230 °C. These samples were not very homogeneous, owing to the presence of bubbles, and, consequently were discarded as being deficient.

Example 2

600 parts by weight of a 4A zeolite sold by AUSIDET of Milan under the trade name Merilit® B were heated,in a stainless reactor equipped with a mixer with rotating blades and heater, at a temperature of 250 °C for about one hour in a flow of nitrogen, resulting in the complete dehydration of the zeolite. 100 parts by weight of p-tert-butylbenzoic acid (TBBA) in powder form were then slowly added, with constant

stirring at 180 °C for a further 30 minutes. The heater was turned off and stirring was continued until the temperature decreased to below 100 °C.

The reactor was discharged and the TBBA-zeolite product was analysed to determine its content of arylcarboxylic acid; the water content was then determined by calcination at 800 °C. The nucleant thus obtained showed the following composition by weight:

| | |
|---|---|
| 4A zeolite (dehydrated) | 80% |
| TBBA | 15% |
| water | 5%. |

To the polymer mixture composed of 5 kg of polypropylene and the other additives mentioned in example 1 (comparative), were added 0.5 kg of a concentrate (masterbatch based on the same isotactic polypropylene), suitably stabilized with antioxidants and containing 10% by weight of the above nucleant; said concentrate had been obtained by a conventional extrusion and granulation process.

The final product was extruded at 280 °C to allow the restructurization of the polymer. The restructured polymer was then pressure moulded at 240 °C and an analysis of the nucleating activity was carried out on several test samples. Table 1 shows values which demonstrate the increase in the crystallization temperature as compared to example 1, together with the values of improved transparency (decrease in the Haze value). The melt flow index of the polymer thus restructured and nucleated is also higher.

EXAMPLE 3

In the polymer mixture of example 1A (comparative) the nucleant was replaced by 1 part by weight of the powder prepared according to the procedure described in example 2. After the mixing, extrusion at 280 °C and granulation were carried out. Test samples were then prepared by means of compression moulding at 230 °C. The results shown in Table 1 indicate that the crystallization temperature was increased from 102 °C to 107 °C and that the Haze value was decreased from 80% to 35% whereas the MFI value rose from 0.3 to 20.

EXAMPLE 4

600 parts by weight of Merilit® B were dried in an oven with air circulation at 300 °C for 2 hours to result in the almost complete dehydration of the zeolite. The zeolite thus obtained was charged into a stainless steel reactor equipped with heating and stirring means. 106 parts by weight of molten TBBA (m.p. = 168 °C) were then added (slowly at 180 °C).

After stirring for 30 minutes at 180 °C, the heater was turned off and the stirring was continued until the temperature had decreased to below 100 °C; the reactor was then discharged. The nucleant thus obtained was storage-stable and showed the following composition by weight:

| | |
|---|---|
| dehydrated zeolite | 80% |
| TBBA | 17% |
| water | 3%. |

100 parts by weight of the crystalline polypropylene of example 1A were mixed thoroughly (for 30 seconds in a Henschel-type laboratory turbomixer) with 0.1 parts by weight of BHT, 0.1 parts by weight of Irganox® 1035 antioxidant and 0.2 parts by weight of calcium stearate. To this mixture there were added 0.6 parts by weight of a radicalic activator composed of 2,3-dimethyl-2,3-diphenylbutane and 1 part by weight of the above nucleant. The mixture was injection moulded at temperatures (of the molten product) of 280-290 °C, with cooling in a mould kept at 30 °C, thus obtaining sheets having a thickness of 2 mm. The behaviour at crystallization and melting temperatures was examined by means of DSC, together with the Haze value and the MFI. Table 1 shows the values for the crystallization temperature, the haze and the melt flow index.

EXAMPLE 5

100 parts by weight of a crystalline ethylene/propylene copolymer (ethylene content = 8% by weight) having a density of 0.9 g/cm$^3$ and a MFI (at 230 °C/21.6N) of 3.5 dg/min. and sold by Himont under the trade name Moplen® EPT 30 R, were mixed in a tumbler with 0.1% of BHT antioxidant, 0.1% of Irganox® 1035 antioxidant and 0.2% of calcium stearate as lubricant. To this mixture there were added 0.6% by weight of a radicalic activator composed of 3,4-dimethyl-3,4-di-phenyl-hexane, sold by Peroxid-Chemie under the trade name Interox® CCDFH. To the resulting mixture there were added 10 parts by weight of a concentrate based on the same copolymer, adequately stabilized with the antioxidants previously used and containing 10% by weight of the nucleant produced according to the procedure of example 4.

The mixture was then injection moulded with a Negri and Bossi 225-640 N moulding press (with a 50 mm diameter cylinder and nozzle) at a temperature (of the molten product) of 285-295 °C and a specific pressure of 980 bar.

The mould was then cooled to 30 °C. 2 mm thick test samples were subjected to a DSC test to determine the crystallization temperature. The Haze value was then determined in accordance with ASTM-D-1003, followed by the determination of MFI of the nucleated polymer.

The values given in Table 1 show the effectiveness of the present nucleant also in the case of ethylene-propylene copolymers.

Table 1

| | Ex.1 | Ex.2 | Ex.3 | Ex.4 | Ex.5 |
|---|---|---|---|---|---|
| Crystallization temperature (°C) | 102 | 118 | 107 | 108 | 110 |
| Haze value (ASTM-D-1003) | 80% | 30% | 35% | 32% | 8% |
| MFI (230°C/21.6 N) (ASTM-D-1238/73-L) | 0.3 | 12 | 20 | 18 | 20 |

## Claims

1. Nucleant for thermodegradable crystalline polyolefins, comprising at least one zeolitic molecular sieve having a water content of not more than 5% by weight and being modified with at least one aromatic monocarboxylic acid.

2. Nucleant according to claim 1, wherein the molecular sieve is a natural or synthetic zeolite which has thermally been treated until the water content is reduced to not more than 5% by weight.

3. Nucleant according to any one of claims 1 and 2, wherein the molecular sieve is a 4A type zeolite having a particle size distribution of from about 0.1 to about 100 μm, preferably of from about 0.1 to about 10 μm.

4. Nucleant according to any one of the preceding claims wherein the aromatic monocarboxylic acid has

the general formula

Ar-COOH

wherein Ar is an aromatic radical which may optionally be substituted by lower alkyl and/or lower alkoxy radicals

**5.** Process for the preparation of nucleants according to any one of the preceding claims, comprising:
a) thermally treating a zeolite at a temperature higher than about 200° C, preferably of from about 250 to about 300° C, optionally under a flow of a dry, inert gas; and
b) causing a reaction between the thermally treated zeolite and an aromatic monocarboxylic acid at a temperature of from about 150 to about 350° C, preferably of from about 160 to about 310° C.

**6.** Process according to claim 5, wherein the reaction between the zeolitic molecular sieve and the acid is carried out at atmospheric pressure.

**7.** Process according to any one of claims 5 and 6, wherein from 8 to 20 parts by weight of acid per 100 parts of activated zeolite are used.

**8.** Products based on crystalline polyolefins having a high nucleation degree, obtainable by molding an olefinic polymer containing the nucleant according to any one of claims 1 to 4.

**9.** Products according to claim 8, wherein the nucleant is present in quantities of from 0.5 to 15% by weight of the total mixture of nucleant and polymer.

**10.** Products according to any one of claims 8 and 9, wherein the polyolefin is a homopolymer or copolymer of propylene.

European Patent Office

# EUROPEAN SEARCH REPORT

Application Number

**EP 91 10 0056**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 113 629 (MONTEDISON S.P.A)<br>* page 9, line 26 - page 11, line 40; claims 1-9 *<br>- - - - - | 1-10 | C 08 K 9/04<br>C 08 K 3/34<br>C 08 L 23/02 |

| TECHNICAL FIELDS SEARCHED (Int. Cl.5) |
|---|
| C 08 K<br>C 08 L |

The present search report has been drawn up for all claims

| Place of search | Date of completion of search | Examiner |
|---|---|---|
| The Hague | 10 April 91 | WILSON A.J.D. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document